# EUROPEAN PATENT SPECIFICATION

(11) **EP 2 006 772 B1**
(45) Date of publication and mention of the grant of the patent: **02.06.2010**
(21) Application number: 07012270.0
(22) Date of filing: 22.06.2007
(51) Int. Cl.: G06F 11/14, G06F 9/46

(54) **Database system and method for external backup**
Datenbanksystem und Verfahren zur externen Datensicherung
Système de base de données et procédé de sauvegarde externe

(43) Date of publication of application: 24.12.2008
(73) Proprietor: SOFTWARE AG, 64297 Darmstadt (DE)
(72) Inventor: Schmidt, Andreas, 63762 Grossostheim (DE); Schöning, Harald, 64807 Dieburg (DE); Obmann, Wolfgang, 64293 Darmstadt (DE)
(74) Representative: Heselberger, Johannes

(56) References cited:
- EP-A- 1 361 515
- US-B1- 6 957 221
- VIRPI MÄKINEN: "Analysis of Use Case Approaches to Requirements Engineering" MASTER'S THESIS, [Online] 19 June 2003 (2003-06-19), pages 1-144, XP002468204 Jyväskylä Retrieved from the Internet: URL:http://thesis.jyu.fi/v03/G0000231.pdf> [retrieved on 2008-02-07]
- C. PAUTASSO ET AL: "Service Oriented Development In a Unified fraMework" DETAILED SPECIFICATION, [Online] 19 February 2006 (2006-02-19), pages 1-92, XP002468205 Retrieved from the Internet: URL:http://www.atc.gr/sodium/upload/public ations/D10_Runtime_Platform.pdf> [retrieved on 2008-02-07]

## Description

### 1. Technical Field

The present application relates to a database system comprising database logic and a backup interface for external backup.

### 2. The Prior Art

Databases are very important technical tools of modem information societies. Typically, databases are constantly accessed by a number of clients deleting, adding or changing the content of the database. For example in case of a database of a financial institution, there is a continuous flow of transactions performed on the database, which requires the correct technical processing of the corresponding data.

For security reasons it is imperative that backups of parts or the overall database are performed so that none or only non-essential data is lost, in case of a failure in the hardware and/or software of the database system. To this end, it is known in the art to provide backup systems such as mirrored disks, tape streamers or any other combination of hardware and software, which is capable to reliably backup the data of the database system. Such a backup system can be provided internally and therefore be tightly integrated into the operation of the database system. In some situations, however, it is preferable to connect the database system to an external backup system. One reason is that such a backup system might be in a remote place thereby increasing the security for the stored data. Further, manufacturers of external backup systems are highly specialized and may be able to provide an amount of security for the stored data, which can not be provided by an internal backup system.

Performing a backup of a database system with an external backup system requires typically a high amount of manual work in order to select the various volumes of data to be saved and their destination directories for the backup. Similar efforts are needed to restore the data in a decoupled fashion. Further, the database administrators must put the database in a synchronized state before they can manually perform a backup or a restore.

Alternatively, a lot of programming effort is needed to provide a special interface allowing the database system to directly access a certain external backup system. Whenever the external backup system changes, for example if the content of the database exceeds the capabilities of a certain external backup system, this binding process and all the related effort must be repeated so that the database system can cooperate with the new external backup system.

The Document *"Analysis of Use Case Approaches to Requirements Engineering"* of Virpi Mäkinen (Master's Thesis, June 19, 2003) discusses a number of use case approaches for specifying requirements of a software system. It discloses the notion of extension points, which is a well-known concept of the Unified Modelling Language (UML) for modularizing requirements, so that the behaviour of a base use case can be extended at specially defined extension points by an extending use case. Such extension points may be used in various contexts, to model e.g. performance, time and cost constraints, backup/recovery, user support or documentation.

The Document *"Service Oriented Development in a Unified Framework"* of C. Pautasso et al. (Detailed Specification, February 19 2006) discloses a framework called SODIUM Runtime Environment, which comprises an abstract plug-in mechanism for integrating additional functionality into a base system.

EP 1 361 515 A1 discloses a method and system for the backup of a database on a permanent memory, wherein the data is first buffered in a working memory and subsequently stored on the permanent memory. The method and system thereby increases the data throughput of the backup process. The disclosed solution is specifically designed for connecting a database to one concrete type of backup system.

US 6,957,221 B1 discloses a method for capturing a physically consistent snapshot of a primary database at a secondary database. The latter is then mirrored to a secondary remote backup database, thus increasing the availability of the primary database.

In view of the above, it is the technical problem underlying one aspect of the present invention to provide a database system which facilitates the binding to new external backup systems in order to overcome at least some of the disadvantages of the prior art.

### 3. Summary of the Invention

This problem is solved by a method according to claim 1 of the present application.

Accordingly, the described embodiment provides a number of designated extension points for a defined backup interface enabling a database system to connect to a variety of external backup systems. The standardized interface allows to strictly divide hardware specific aspects of the backup process from the database logic. The plugged-in functions need only to implement the storage specific methods for realizing at least some of the extension points. On the side of the external backup system there is no need to care about database synchronisation or other steps, which may be necessary for the database logic to perform prior to initiating a backup process or a restore process.

The standardized backup interface is preferably specifically adapted for the support of databases. To this end, the preconfigured data are handed over in the form of parameter=value. Further, the name of the backup and the name of the database can be added.

In one embodiment, the database system further comprises a graphical user interface for the control of an external backup, wherein the content of the graphical user interface is at least partly driven by one or more of the plugged-in functions of at least one of the different external backup systems. To this end, the database system may comprise a registry, the registry being adapted to receive entries for the one or more connected external backup systems. Accessing the registry, the graphical user interface can therefore present different backup controls, which are specific for a certain external backup system. As a result, the database system flexibly adapts its user interface to the one or more backup systems, which are presently connected.

Further, the set of extension points may comprise an extension point METHOD, which provides a string for each of the plurality of different external backup systems, the registry being adapted to store the string. Again, the graphical user interface may comprise a configuration screen for an external backup, wherein the screen is adapted to present the string.

The database system may further comprise an extension point PARAMETER, which provides one or more pairs of parameters and their values, which may be specific for one of the external backup systems. The graphical user interface can then comprise a configuration screen for the external backup, wherein the screen is adapted to set the value(s) of the one or more pairs of parameters.

The database system further comprises a BACKUP START extension point, a BACKUP PROCESS extension point, a BACKUP END extension point and a BACKUP RESTORE extension point, which prepare, process, finalize and restore a database backup using one of the different external backup systems.

According to another aspect, the present invention is directed to a method of performing a backup of a database using a database system as described above. The method could be implemented using a computer program with suitable instructions.

### 3. Short Description of the Drawings

In the following detailed description, presently preferred embodiments are described with reference to the following figures:
- Fig. 1:: A schematic presentation of an embodiment of a database system of the present invention and its interface for various external backup systems;
- Fig. 2:: An exemplary screen of a registry editor for a database for receiving entries concerning an external database system;
- Fig. 3:: An example of a configuration screen of a database server adapted to configure an external backup;
- Fig. 4:: An exemplary screen of a registry of the database presenting three parameters and their values of an external backup system;
- Fig. 5:: An example of a screen for selection of an external backup;
- Figs. 6, 7:: Flow charts illustrating the processing of an external backup in the database system of an embodiment of the present invention; and
- Fig. 8:: A flow chart illustrating a restore process from a backup created using an external backup system.

### 4. Detailed description

In the following, an embodiment of the present invention is described with reference to an XML database, in particular the Tamino database, of applicant. However, it is to be understood that the present invention can be used for any kind of database system regardless of its specific design or content. In particular, the database can be centralized or distributed and can be managed using one or more servers. None of these implementation details is essential for the present invention.

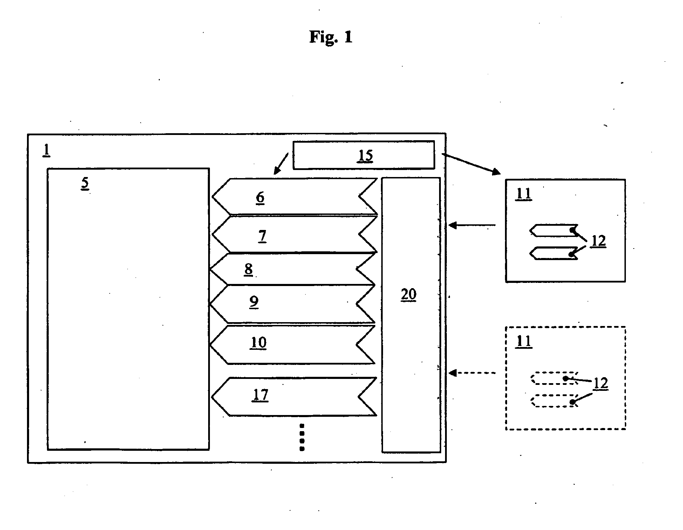

Fig. 1 presents a schematic overview of a database system 1. As can be seen, the database system 1 comprises database logic 5, which could for example be implemented in one or more database servers. The database logic 5 serves to manage the database, for example to receive and to store new entries or to process queries on the data (not shown in Fig. 1) of the database system 1. In order to backup the data, the database system 1 of Fig. 1 may use an internal backup system, if present. However, the database system of Fig. 1 is alternatively or additionally to the internal backup system capable to be interfaced with one of more external backup systems 11, which are shown on the right side of the schematic drawing of Fig. 1.

As indicated by the dashed lines, there might be more than one backup system connected to the database system at the same time. The external backup systems may comprise suitable hard- and software such as a SAN (storage area network) or any other arrangement, which can be used for backup, for example for taking a snapshot of a certain file system or for mirroring a disk or a volume of the database system to another disk with a subsequent split.

Fig. 1 also shows that the various external backup systems 11 communicate with the database system 1 and its database logic 5 via a single interface 20. To this end, a set of extension points 6, 7, 8, 9, 10 and 17 are provided, which link the database logic 5 to the interface 20. Using the set of extension points, the database logic 5 can configure and call any of the connected external backup systems 11 and backup or restore data. As indicated by the dotted line in the lower half of Fig. 1, there may be more than the six extension points shown in Fig.1. However, there is no direct communication between the database logic 5 and any of the connected external backup systems 11.

The external backup systems 11 on their side comprise one or more plug-in functions 12. The functions 12 may be closely related to the extension points and directly implement them. In one embodiment, they are implemented as .dll files and stored in a suitable library (not shown in Fig. 1). The library and the included functions may be registered in a registry 15 of the database system 1, so that they can be accessed as shared objects, when a backup or a restore operation is to be performed using the respective external backup system 11.

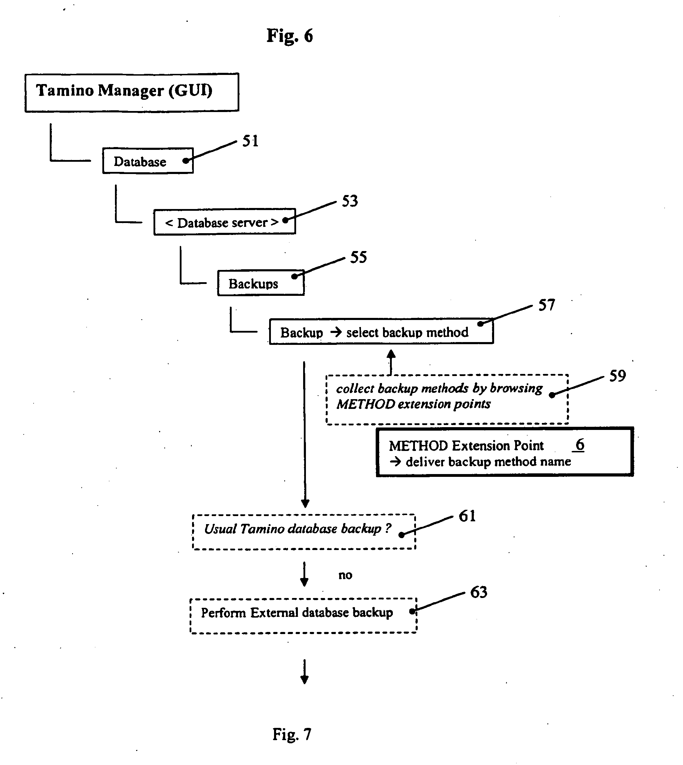

In the following, it will be explained with respect to the flow charts of Figs. 6-8, how a backup and a restore operation can be configured and carried out using the database system 1 of the embodiment of Fig. 1. In these flow charts, boxes with bold lines indicate steps performed by the implementation of an extension point by a certain external backup system, whereas boxes with thin lines indicate components or steps performed using a graphical user interface, for example of the Tamino database manager of applicant. An arrow inside a box reflects an action to be performed. Boxes with dashed lines, finally, indicate a processing step.

To make a new external backup system 11 known to the database system 1, there are two extension points 6 and 7 for its configuration, which are called extension point METHOD and PARAMETER. They allow to define the environment for the respective backup system. Subsequently, the administration GUI of the database is able to find appropriate entries to configure and initiate database backups using the respective system and the administration GUI can show corresponding GUI elements.

As indicated by the flowchart of Fig. 6, a certain database is at first selected to be managed (step 51) and possibly an appropriate database server (step 53). The GUI then provides an option to select a configuration menu for backups (step 55), wherein at least one backup method (internal or one of a plurality of external backups) can be selected (step 57). Using the above explained METHOD extension point 6, the names of one or more external backup systems are obtained, which can be browsed (step 59). Finally, one of them can be selected. If so, the processing is set in steps 61 and 63 to use the selected external backup and not any internal backups integrated into the database system 1.

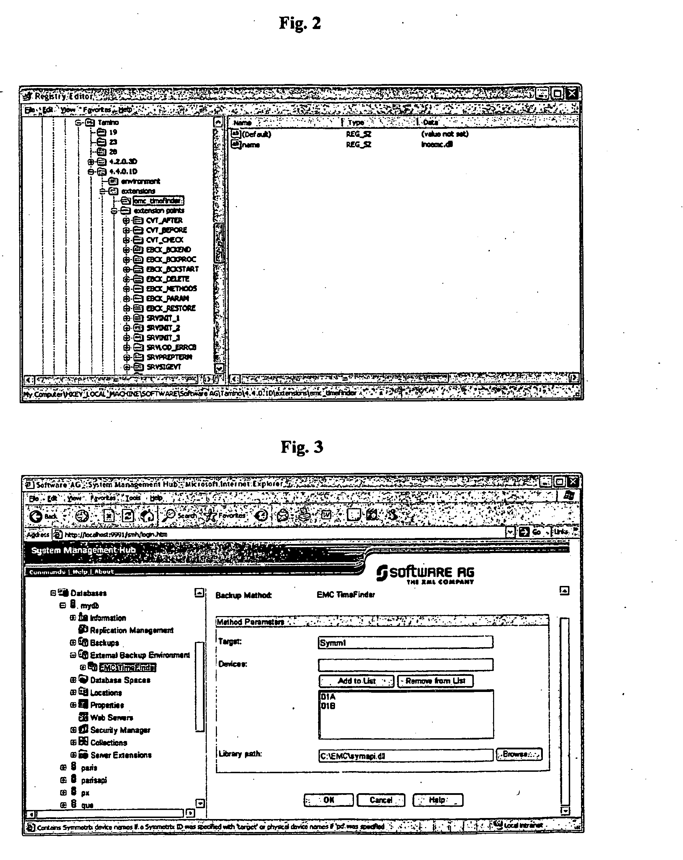

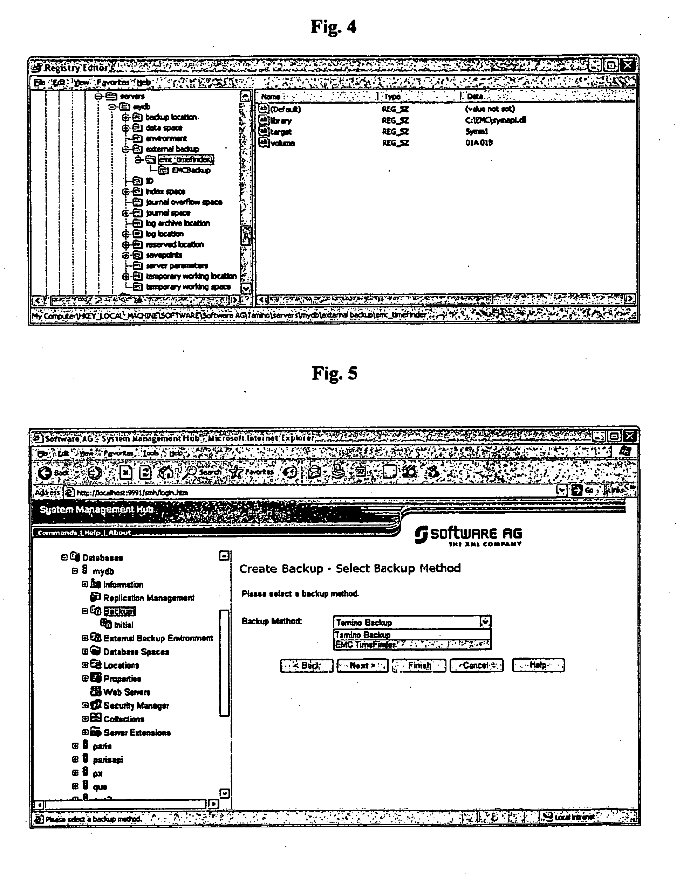

The GUI is able to present these names based on information in the registry 15. Fig. 2 presents a screen shot from a registry editor, indicating a name and a corresponding .dll file for a registered external backup system ("inoemc.dll"). In the GUI itself, the selection of step 57 between an internal backup and one of the registered external backup systems is made using a selection screen, as shown in Fig. 5. Here, the user can decide whether an internal "Tamino Backup" is to be performed or whether an external backup is selected, for example the backup with the name "EMC TimeFinder".

If the METHOD extension point 6 is available, i.e. an external backup system can be identified, the Tamino's Administration GUI is able to retrieve configuration parameters. Then the PARAMTER extension point 7 has the task to obtain backup specific parameters as pairs of name/value. The parameters are in general very specific to the storage system. For example a so-called NetApp backup system would deliver the name of the filer and the name of the volume, where the database is located. The parameters will be permanently stored in the database's registry.

Since plug-in functions are used for the implementation of the extension points, it is possible that these functions also drive the GUI of the database manager. Fig. 3 presents a GUI screen driven by a backup system called EMC TimeFinder. As can be seen, the screen allows to define various parameters such as the target, the devices and the library path of a backup. Selecting these parameters will lead to corresponding entries in the database registry (cf. Fig. 4).

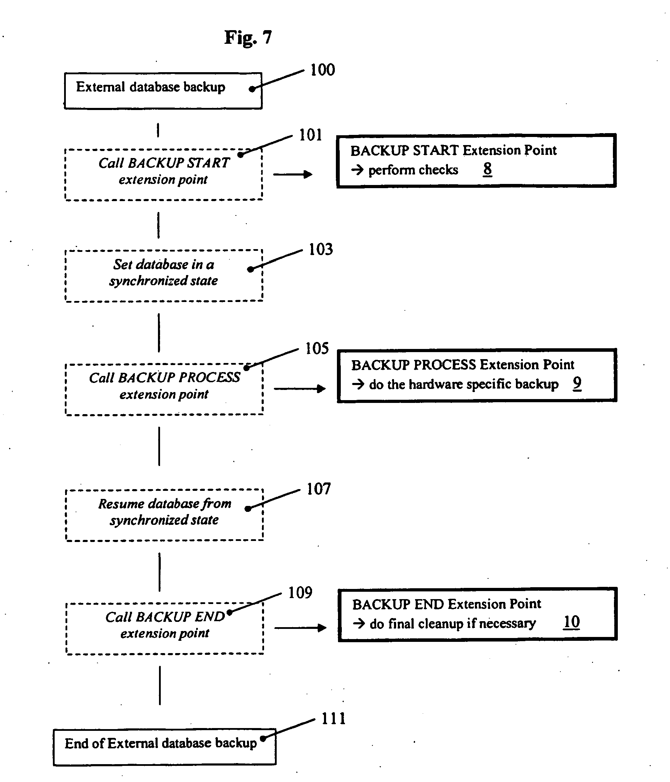

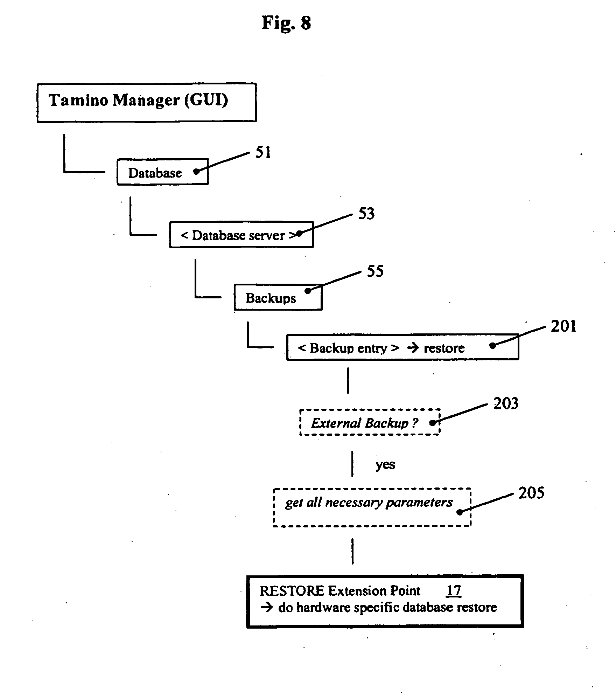

After identification and configuration a newly connected external backup system is ready for use. This is explained in the following with reference to the flowcharts of Figs. 7 and 8. In a first step 100 (cf. Fig. 7), an external backup is initiated. In step 101, the database logic 5 calls the BACKUP START extension point 8. The BACKUP START extension point 8 is designed to prepare a database backup. The specific implementation is able to check if the configuration is valid.

However, at this point the database system is not in a synchronized state. Therefore, the database logic 5 will bring the database system into a synchronized state, for example by closing any open tasks and no longer accepting any further tasks. This is schematically indicated by the step 103 in Fig. 7.

In the next step 105, the BACKUP PROCESS extension point 9 is called by the database logic. The BACKUP PROCESS extension point 9 is designed to execute a database saving in the hardware specific way. Here, a file system snapshot can be performed or a mirror can be split to be used as a backup medium. Calling this extension point after synchronization, the database system is in a state where the data to be freezed is reliable, i.e. no writes to the database will occur. After the backup processing is finished, the database continues its normal operation and is no longer in synchronized state (cf. step 107 in Fig. 7).

The BACKUP END extension point 10 is called in step 109. It enables a final processing of the saved data. The specific implementation of step 109 by an external backup system can do final processing with its created backup medium. Alternatively, this extension point is called, if some error occurred for cleanup. The process ends in step 111.

After the described backup processing has been successfully completed, an entry can be made in the list of backups (no shown) like after any internal database backup. Each backup list entry can be selected by the Tamino Administration GUI, mainly for performing a database restore operation, which will be described below with reference to Fig. 8.

The RESTORE extension point 17 is designed to restore the database from the specific hardware storage previously saved with the corresponding BACKUP extension points. As can be seen from the flow chart of Fig. 8, each backup is selectable with the Tamino Administration GUI using again steps 50 - 55. The backup entry of the external backup has all the information necessary for a restore operation. Once a restore command has been issued in step 201, it will at first be identified, whether an internal or an external backup is to be restored (step 203). Further, suitable parameters are identified (step 205). Finally, the RESTORE extension point 17 can perform the hardware specific database restore.

It is to be noted that the whole backup and restore process can thus be controlled by the database logic 5 of the database system 1 without any adaptation to the specific backup system presently connected. On the contrary, the backup interface 20 with its extension points and the plug-in functions of the various external backup systems 11 allow to flexibly change from one external backup system 11 to another with a minimum amount of configuration effort.

## Claims

1. A database system (1), in particular a XML database system, comprising a database logic (5) adapted to perform database processing and a backup interface (20) for external backup, **characterized in that**
a. the backup interface (20) is adapted to connect the database system (1) to a plurality of different external backup systems (11);
b. wherein the database logic (5) communicates with the backup interface (20) using only a predefined set of extension points (6, 7, 8, 9, 17) comprising a BACKUP START extension point (8), a BACKUP PROCESS extension point (9), a BACKUP END extension point (10) and a BACKUP RESTORE extension point (17), which prepare, process, finalize and restore a database backup using one of the different external backup systems (11);
c. wherein the backup interface (20) is adapted to receive one or more plugged-in functions (12) comprised in the different external backup systems (11) that implement the extension points (6, 7, 8, 9, 17); and
d. wherein the database logic (5) is adapted to:
- call (101) the BACKUP START extension point (8), so that the specific implementation of the used external backup system (11) can check if its configuration is valid;
- set (103) the database system (1) in a synchronized state by closing any open tasks and no longer accepting any further tasks;
- call (105) the BACKUP PROCESS extension point (9) to execute a database saving in a hardware-specific way;
- resume (107) the database system (1) from the synchronized state; and
- call (109) the BACKUP END extension point (10), so that the specific implementation by the used external backup system (11) can perform a final processing with its backup medium.

2. The database system (1) of claim 1, further comprising a graphical user interface for the control of an external backup, wherein the content of the graphical user interface is at least partly driven by one or more of the plugged-in functions (12) of at least one of the different external backup systems (11).

3. The database system (1) of claim 2 further comprising a registry (15), the registry (15) being adapted to receive entries for the one or more connected external backup systems (11).

4. The database system (1) of claim 3, wherein the set of extension points (6, 7, 8, 9, 10, 17) comprises an extension point METHOD (6), which provides a string for each of the plurality of different external backup systems, the registry being adapted to store the string.

5. The database system (1) of claim 4, wherein the graphical user interface comprises a configuration screen for an external backup, the screen being adapted to present the string.

6. The database system (1) of any of the preceding claims further comprising an extension point PARAMETER (7), which provides one or more pairs of parameters and their values specific for one of the external backup systems (11).

7. The database system (1) of claim 6 together with claim 2, wherein the graphical user interface comprises a configuration screen for the external backup, the screen being adapted to set the value(s) of the one or more pairs of parameters.

8. The database system (1) of any of the preceding claims further comprising an internal backup system.

9. The database system (1) of any of the preceding claims, wherein the one or more of a plurality of different hardware systems for backup are adapted to perform a snapshot and/or a mirror and split of the data of the database system.

10. Method of performing a backup of a database using a database system of any of the preceding claims.

11. Computer program comprising instructions for performing a method of claim 10.

## Patentansprüche

1. Ein Datenbanksystem (1), insbesondere ein XML-Datenbanksystem, aufweisend eine Datenbanklogik (5), die ausgebildet ist zum Durchführen von Datenbankverarbeitung, und eine Backup-Schnittstelle (20) für externes Backup, **dadurch gekennzeichnet, dass**
a. die Backup-Schnittstelle (20) ausgebildet ist, um das Datenbanksystem (1) mit einer Mehrzahl von verschiedenen externen Backup-Systemen (11) zu verbinden;
b. wobei die Datenbanklogik (5) mit der Backup-Schnittstelle (20) nur unter Verwendung eines vordefinierten Satzes von Erweiterungspunkten (6, 7, 8, 9, 17) kommuniziert, welcher einen BACKUP START Erweiterungspunkt (8), einen BACKUP PROCESS Erweiterungspunkt (9), einen BACKUP END Erweiterungspunkt (10) und einen BACKUP RESTORE Erweiterungspunkt (17) aufweist, die ein Datenbank-Backup unter Verwendung eines der verschiedenen externen Backup-Systeme (11) vorbereiten, verarbeiten, abschließen und wiederherstellen;
c. wobei die Backup-Schnittstelle (20) ausgebildet ist, um eine oder mehrere Plugged-In-Funktionen (12) zu empfangen, die in den verschiedenen externen Backup-Systemen (11) enthalten sind, welche die Erweiterungspunkte (6, 7, 8, 9, 17) implementieren; und
d. wobei die Datenbanklogik (5) ausgebildet ist, um:
- den BACKUP START Erweiterungspunkt (8) aufzurufen (101), so dass die spezifische Implementierung des genutzten externen Backup-Systems (11) prüfen kann, ob seine Konfiguration gültig ist;
- das Datenbanksystem (1) in einen synchronisierten Zustand zu versetzen (103) durch Schließen jeglicher offener Aufgaben (Tasks) und durch nicht länger Akzeptieren weiterer Aufgaben;
- den BACKUP PROCESS Erweiterungspunkt (9) aufzurufen (105), um eine Datenbanksicherung in einer Hardwarespezifischen Weise auszuführen;
- das Datenbanksystem (1) aus dem synchronisierten Zustand wiederherzustellen (107); und
- den BACKUP END Erweiterungspunkt (10) aufzurufen (109), so dass die spezifische Implementierung des verwendeten externen BACKUP Systems (11) eine abschließende Verarbeitung innerhalb seines Backupmediums ausführen kann.

2. Das Datenbanksystem (1) nach Anspruch 1, ferner aufweisend eine graphische Benutzerschnittstelle für die Kontrolle eines externen Backups, wobei der Inhalt der graphischen Benutzerschnittstelle zumindest zum Teil durch eine oder mehrere der Plugged-In-Funktionen (12) von zumindest einem der verschiedenen externen Backup-Systeme (11) getrieben wird.

3. Das Datenbanksystem (1) nach Anspruch 2, ferner aufweisend ein Register (15), wobei das Register (15) ausgebildet ist, um Einträge für die einen oder mehreren verbundenen externen Backup-Systeme (11) zu empfangen.

4. Das Datenbanksystem (1) nach Anspruch 3, wobei der Satz von Erweiterungspunkten (6, 7, 8, 9, 10, 17) einen Erweiterungspunkt METHOD (6) aufweist, welcher eine Zeichenkette (String) für jedes der Mehrzahl von verschiedenen externen Backup Systemen bereitstellt, wobei das Register ausgebildet ist, um die Zeichenkette zu speichern.

5. Das Datenbanksystem (1) nach Anspruch 4, wobei die graphische Benutzerschnittstelle einen Konfigurationsbildschirm für ein externes Backup aufweist, wobei der Bildschirm ausgebildet ist, um die Zeichenkette anzuzeigen.

6. Das Datenbanksystem (1) nach einem der vorhergehenden Ansprüche, ferner aufweisend einen Erweiterungspunkt PARAMETER (7), welcher ein oder mehrere Paare von Parametern und deren Werte bereitstellt, die spezifisch für eines der externen Backup-Systeme (11) sind.

7. Das Datenbanksystem (1) nach Anspruch 6 zusammen mit Anspruch 2, wobei die graphische Benutzerschnittstelle einen Konfigurationsbildschirm für das externe Backup aufweist, wobei der Bildschirm ausgebildet ist, um den Wert/die Werte des einen oder der mehreren Paare von Parametern zu setzen.

8. Das Datenbanksystem (1) nach einem der vorhergehenden Ansprüche, ferner aufweisend ein internes Backup-System.

9. Das Datenbanksystem (1) nach einem der vorhergehenden Ansprüche, wobei die ein oder mehreren einer Mehrzahl von verschiedenen Hardware-Systemen für Backup ausgebildet sind, um einen Schnappschuss (snapshot) und/oder eine Spiegelung (mirror) und Teilung (split) der Daten des Datenbanksystems durchzuführen.

10. Verfahren zum Durchführen eines Backups einer Datenbank unter Verwendung eines Datenbanksystems nach einem der vorhergehenden Ansprüche.

11. Computerprogramm aufweisend Anweisungen zum Durchführen eines Verfahrens nach Anspruch 10.

## Revendications

1. Un système de base de données (1), en particulier un système de base de données XML, comprenant une logique de base de données (5) apte à exécuter un traitement de base de données et une interface de sauvegarde (20) pour une sauvegarde externe, **caractérisé en ce que**
a. l'interface de sauvegarde (20) est adaptée pour connecter le système de base de données (1) à une pluralité de systèmes de sauvegarde externe différents (11) ;
b. la logique de base de données (5) communiquant avec l'interface de sauvegarde (20) en n'utilisant qu'un jeu prédéfini de points d'extension (6, 7, 8, 9, 17) comprenant un point d'extension BACKUP START (8), un point d'extension BACKUP PROCESS (9), un point d'extension BACKUP END (10) et un point d'extension BACKUP RESTORE (17) qui préparent, traitent, finalisent et restaurent une sauvegarde de base de données en utilisant l'un des systèmes de sauvegarde externe différents (11) ;
c. l'interface de sauvegarde (20) étant adaptée pour recevoir une ou plusieurs fonctions complémentaires (12) comprises dans les différents systèmes de sauvegarde externe (11) qui implémentent les points d'extension (6, 7, 8, 9, 17) ; et
d. dans lequel la logique de base de données (5) est apte à :
- appeler (101) le point d'extension BACKUP START (8), de sorte que l'implémentation spécifique du système de sauvegarde externe (11) puisse vérifier si sa configuration est valide ;
- mettre (103) le système de base de données (1) dans un état synchronisé en fermant toutes les tâches ouvertes et en n'acceptant plus de nouvelles tâches ;
- appeler (105) le point d'extension BACKUP PROCESS (9) pour exécuter une sauvegarde de base de données d'une manière spécifique au matériel ;
- reprendre (107) le système de base de données (1) à partir de l'état synchronisé ; et
- appeler (109) le point d'extension BACKUP END (10), de sorte que l'implémentation spécifique par le système de sauvegarde externe utilisé (11) puisse exécuter un traitement final avec son support de sauvegarde.

2. Le système de base de données (1) de la revendication 1, comprenant en outre une interface graphique utilisateur pour le contrôle d'une sauvegarde externe, le contenu de l'interface graphique utilisateur étant au moins partielle piloté par une ou plusieurs des fonctions complémentaires (12) d'au moins l'un des systèmes de sauvegarde externe différents (11).

3. Le système de base de données (1) de la revendication 2, comprenant en outre un registre (15), le registre (15) étant apte à recevoir des entrées pour les un ou plusieurs systèmes de sauvegarde externe connectés (11).

4. Le système de base de données (1) de la revendication 3, dans lequel l'ensemble de points d'extension (6, 7, 8, 9, 10, 17) comprend un point d'extension METHOD (6), qui fournit une chaîne pour chacun de la pluralité de systèmes de sauvegarde externe différents, le registre étant apte à mémoriser la chaîne.

5. Le système de base de données (1) de la revendication 4, dans lequel l'interface utilisateur graphique comprend un écran de configuration pour une sauvegarde externe, l'écran étant apte à présenter la chaîne.

6. Le système de base de données (1) de l'une des revendications précédentes, comprenant en outre un point d'extension PARAMETER (7), qui fournit un ou plusieurs paires de paramètres et leurs valeurs spécifiques pour un des systèmes de sauvegarde externe (11).

7. Le système de base de données (1) de la revendication 6 considérée en combinaison avec la revendication 2, dans lequel l'interface utilisateur graphique comprend un écran de configuration pour la sauvegarde externe, l'écran étant apte à déterminer la ou les valeurs de la une ou plusieurs paires de paramètres.

8. Le système de base de données (1) de l'une des revendications précédentes, comprenant en outre un système de sauvegarde interne.

9. Le système de base de données (1) de l'une des revendications précédentes, dans lequel les un ou plusieurs d'une pluralité de systèmes matériels différents pour la sauvegarde sont aptes à réaliser un instantané et/ou une réplication et division des données du système de base de données.

10. Procédé d'exécution d'une sauvegarde d'une base de données par utilisation d'un système de base de données de l'une des revendications précédentes.

11. Programme informatique comprenant des instructions pour exécuter un procédé selon la revendication 10.
